# EUROPEAN PATENT APPLICATION

(11) **EP 1 542 128 A1**
(43) Date of publication of application: **15.06.2005**
(21) Application number: 02765449.0
(22) Date of filing: 09.09.2002
(51) Int. Cl.: G06F 12/00, G06F 15/00, H04L 12/56

(54) **INFORMATION PROVIDING SYSTEM, INFORMATION PROVIDING APPARATUS, ELECTRONIC APPARATUS, ADDRESS SETTING METHOD, PROGRAM, AND STORAGE MEDIUM**

(71) Applicant: FUJITSU LIMITED, Kawasaki-shi, Kanagawa 211-8588 (JP)
(72) Inventor: TAKAHASHI, Tadashi c/o FUJITSU LIMITED, Kawasaki-shi, Kanagawa 211-8588 (JP)
(74) Representative: Stebbing, Timothy Charles
(86) International application number: PCT/JP2002/009152
(87) International publication number: WO 2004/023309

(57) **Abstract**

An information providing system including an information providing apparatus for providing predetermined information according to an access from an electronic apparatus. The information providing apparatus includes a first acquiring unit for acquiring identification information correlated to predetermined information, a first generation unit for generating an address on a network according to identification information acquired by the first acquiring unit, and a setting unit for setting the address on the network generated by the first generation unit as an address for access from the electronic apparatus. The electronic apparatus includes a second acquiring unit for acquiring identification information correlated to predetermined information desired by a user, a second generation unit for generating an address on the network according to the identification information acquired by the second acquiring unit, and desired information acquiring unit for accessing a particular information providing apparatus according to the address on the network generated by the second generation unit and acquiring predetermined information provided by the particular information providing apparatus.

## Description

### BACKGROUND OF THE INVENTION

### 1. Field of the present invention

The present invention relates to an information providing system including an electronic device and an information providing device for providing predetermined information in response to an access from the electronic device.

### 2. Description of the related art

Conventionally, known is a conventional information providing system including a client 200' and a network connection storage device 100' (which will hereinafter be referred to as the information providing device 100') for providing predetermined information in response to an access from the client 200'.

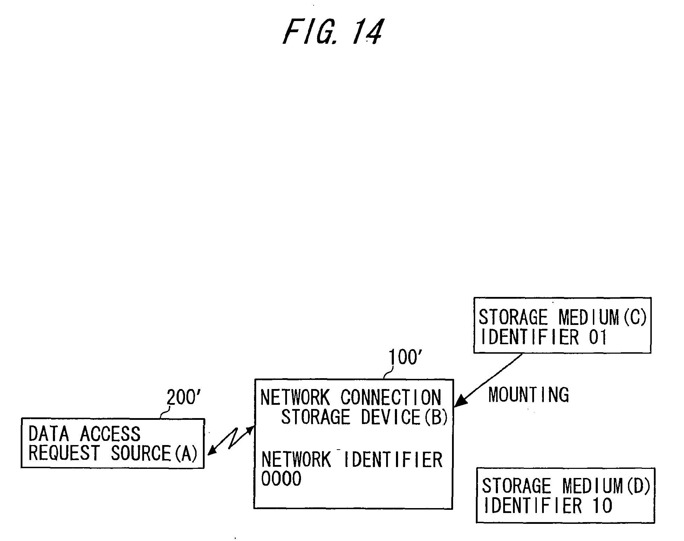

FIG. 14 is an explanatory diagram showing an outline of architecture of the conventional information providing system.

A storage medium C (or D) such as a MO disk (Magneto Optical disk), etc. recorded with the predetermined information (e.g., movie data) defined as providing object information, is mounted into the information providing device 100'. An address (which is an IPv6 address containing a network identifier "0000" in FIG. 14) for accessing from the client 200', is set in the network connection storage device 100'. The information providing device 100' provides the predetermined information (recorded on the storage medium C mounted therein) to the client 200' that has accessed the set address. Note that this address (the IPv6 address) is set in such a way that a user manually performs an input operation of the operating system running on the network connection storage device 100'.

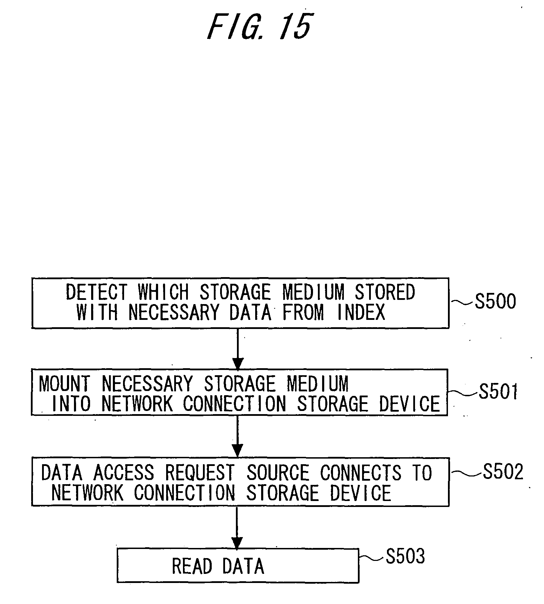

In the above conventional information providing system, the predetermined information is acquired in the following procedure. FIG. 15 is an explanatory flowchart showing this procedure.

To start with, the storage medium recorded with a necessary piece of data (a desired piece of predetermined information) is searched from the index, etc. (S500) and is mounted into the information providing device 100' (S501). On the occasion of acquiring the desired predetermined information, the client 200' accesses the information providing device 100' mounted with this storage medium (S502), and thus acquires the desired predetermined information (S503). An address for this access is obtained in such a manner that a user, etc. designates the network identifier (e.g., "0000") assigned to the information providing device 100' mounted with this storage medium.

In the above conventional information providing system, different storage mediums can be mounted into the information providing device 100', and hence, on the occasion of acquiring the desired predetermined information, there is a necessity of grasping (the network identifiers, etc. of) the information providing devices 100' capable of providing the predetermined information (i.e., the devices 100' into which the storage mediums recorded with the desired predetermined information are mounted). This operation is a large burden on the user (especially in a case where the plurality of information providing devices 100' exist).

### SUMMARY OF THE INVENTION

The present invention, in an information providing system including an electronic device and an information providing device for providing the predetermined information in response to an access from the electronic device, aims at enabling a desired piece of predetermined information to be acquired without grasping the information providing devices capable of providing the predetermined information on the occasion of acquiring the desired predetermined information.

The present invention is, for solving the problems given above, an information providing system including an electronic device and an information providing device providing predetermined information in response to an access from the electronic device, wherein the information providing device comprises a first acquiring unit acquiring identifying information associated with the predetermined information, a first generation unit generating an address on a network on the basis of.the identifying information acquired by the first acquiring unit, and a setting unit setting the address on the network generated by the first generation unit as an address for accessing from the electronic device, and wherein the electronic device comprises a second acquiring unit acquiring identifying information associated with predetermined information desired by a user, a second generation unit generating an address on a network on the basis of the identifying information acquired by the second acquiring unit, and a desired information acquiring unit acquiring predetermined information provided by a specified information providing device by accessing the specified information providing device on the basis of the address on the network generated by the second generation unit.

According to the present invention, the address on the network generated based on the identifying information (which is, e.g., inputted by a user or read from the storage medium) associated with the predetermined information is set as the address for the access from the electronic device in the information providing device. On the occasion of acquiring the desired predetermined information, the electronic device acquires the identifying information (which is, e.g., inputted by the user or selected through a reference index) associated with the desired predetermined information, and accesses a specified information providing device on the basis of the address on the network generated based on the acquired identifying information, thereby acquiring the predetermined information (the desired predetermined information) provided by the specified information providing device.

Accordingly, on the occasion of acquiring the desired predetermined information, the electronic device, if able to acquire the identifying information associated with the predetermined information, can acquire the desired predetermined information. In this case, the user has no necessity of grasping the information providing devices capable of providing the desired predetermined information.

The information providing system, for instance, further comprises a mounting unit into which a storage medium (for instance, an information storage medium such as an attachable/detachable MO disk, hard disk and so on) recorded with predetermined information and identifying information associated with the predetermined information is mounted, wherein the first acquiring unit reads the identifying information from the storage medium mounted into the mounting unit.

With this contrivance, the address on the network generated based on the identifying information read from the storage medium mounted into the mounting unit, is set as the address for accessing from the electronic device.

In the information providing system, for example, the storage medium is recorded with the predetermined information and a storage medium identifier as the identifying information associated with the predetermined information. This contrivance makes it possible to utilize the storage medium identifier recorded beforehand on the storage medium as the identifying information associated with the predetermined information.

The information providing system, for instance, further comprises a storage device (such as a hard disk device built in or externally attached to the information providing device) storing predetermined information and identifying information associated with the predetermined information, wherein the first acquiring unit reads the identifying information from the storage device.

With this contrivance, the predetermined information and the identifying information associated with the predetermined information can be stored, rewritten, added or deleted via the network, and so on.

In the information providing system, for instance, the predetermined information is at least one of movie data, music data, book data and business data.

In the information providing system, for example, the electronic device further comprises an image display device displaying information indicating contents of predetermined information in a reference index in which information (e.g., a tile of a movie) indicating contents of predetermined information (e.g., the movie data) provided by an information providing.device is associated with identifying information (e.g., a medium identifier of the storage medium recorded with the movie data) associated with this piece of predetermined information, and a selection unit offering a choice of information indicating contents of at least one piece of predetermined information from within pieces of information indicating the contents of predetermined information that are displayed on the image display device, and the second acquiring unit acquires identifying information with which the information indicating the contents of the predetermined information, which has been selected on the selection unit, is associated.

This contrivance enables the identifying information associated with the desired predetermined information to be acquired by selecting the information indicating the contents of the desired predetermined information by referring to the display on the image display device. Hence, there occurs no mistake of inputting the identifying information associated with the desired predetermined information.

The present invention can be specified as an information providing device configuring the information providing system as follows. An information providing device providing predetermined information in response to an access from an electronic device, comprises an acquiring unit acquiring identifying information associated with the predetermined information, a generation unit generating an address on a network on the basis of the identifying information acquired by the acquiring unit, and a setting unit setting the address on the network generated by the generation unit as an address for accessing from the electronic device.

The information providing device, for example, further comprises a mounting unit into which a storage medium recorded with predetermined information and identifying information associated with the predetermined information is mounted, wherein the acquiring unit reads the identifying information from the storage medium storing the predetermined information and the identifying information associated with the predetermined information.

In the information providing device, for instance, the storage medium is recorded with the predetermined information and a storage medium identifier as the identifying information associated with the predetermined information.

The information providing device, for example, further comprises a storage device storing predetermined information and identifying information associated with the predetermined information, wherein the acquiring unit reads the identifying information from the storage device.

In the information providing device, for example, the predetermined information is at least one of movie data, music data, book data and business data.

The present invention can be specified as an electronic device configuring the information providing system as below. An electronic device acquiring predetermined information by accessing an information providing device via a network, comprises an identifying information acquiring unit acquiring identifying information associated with predetermined information desired by a user, a generation unit generating an address on the network on the basis of the identifying information acquired by the identifying information acquiring unit, and a desired information acquiring unit acquiring predetermined information provided by a specified information providing device by accessing the predetermined information providing device on the basis of the address on the network generated by the generation unit.

The electronic device, for instance, further comprises an image display device displaying information indicating a contents of predetermined information in a reference index in which information indicating contents of predetermined information provided by an information providing device is associated with identifying information associated with this piece of predetermined information, and a selection unit offering a choice of information indicating contents of at least one piece of predetermined information from within pieces of information indicating the contents of predetermined information that are displayed on the image display device, wherein the acquiring unit acquires identifying information with which the information indicating the contents of the predetermined information, which has been selected on the selection unit, is associated.

The present invention can be specified as the invention of a method as follows. An address setting method of setting an address in an information providing device providing predetermined information in response to an access from an electronic device, comprises the steps of acquiring identifying information associated with the predetermined information, generating an address on a network on the basis of the acquired identifying information, and setting the generated address on the network as an address for accessing from the electronic device.

An information acquiring method of acquiring predetermined information by accessing an information providing device via a network, comprises the steps of acquiring identifying information associated with predetermined information desired by a user, generating an address on a network on the basis of the acquired identifying information, and acquiring predetermined information provided by a specified information providing device by accessing the specified information providing device on the basis of the generated address on the network.

The present invention can be specified as the invention of a program as below. A program of setting an address in an information providing device providing predetermined information in response to an access from an electronic device, makes a computer execute a step of acquiring identifying information associated with the predetermined information, a step of generating an address on a network on the basis of the acquired identifying information, and a step of setting the generated address on the network as an address for accessing from the electronic device.

A program of acquiring predetermined information by accessing an information providing device, makes a computer execute a step of acquiring identifying information associated with predetermined information desired by a user, a step of generating an address on a network on the basis of the acquired identifying information, and a step of acquiring predetermined information provided by a specified information providing device by accessing the specified information providing device on the basis of the generated address on the network.

The present invention can be specified as the invention related to a storage medium as below. A storage medium is recorded with predetermined information and identifying information associated with the predetermined information, and is readable by an information providing device providing predetermined information in response to an access from an electronic device, wherein the information providing device comprises an acquiring unit acquiring identifying information associated with the predetermined information, a generation unit generating an address on a network on the basis of the identifying information acquired by the acquiring unit, and a setting unit setting the address on the network generated by the generation unit as an address for accessing from the electronic device.

### BRIEF DESCRIPTION OF THE DRAWINGS

FIG. 1 is an explanatory diagram schematically showing an outline of architecture of an information providing system in an embodiment of the present invention;
FIG. 2 is an explanatory diagram of a hardware architecture of a network connection storage device included in the information providing system in the embodiment of the present invention;
FIG. 3 is an explanatory diagram of a method of recording a medium identifier on a storage medium mounted into the network connection storage device included in the information providing system in the embodiment of the present invention;
FIG. 4 shows an example of a format of the storage medium C mounted into the network connection storage device included in the information providing system in the embodiment of the present invention;
FIG. 5 is an explanatory diagram of a software architecture of the network connection storage device included in the information providing system in the embodiment of the present invention;
FIG. 6 is an explanatory diagram of a format of an address on a network (an IPv6 address) automatically generated in the information providing system in the embodiment of the present invention;
FIG. 7 is an explanatory diagram of a client included in the information providing system in the embodiment of the present invention;
FIG. 8 is an explanatory diagram of a software architecture of the client included in the information providing system in the embodiment of the present invention;
FIG. 9 is an explanatory flowchart of an operation of the information providing system in the embodiment of the present invention;
FIG. 10 is an explanatory diagram of an outline of architecture of the information providing system in the embodiment of the present invention;
FIG. 11 is an explanatory diagram of an outline of architecture of the information providing system in the embodiment of the present invention;
FIG. 12 is an explanatory diagram of an outline of architecture of the information providing system in the embodiment of the present invention;
FIG. 13 is an explanatory flowchart of an operation of the information providing system in the embodiment of the present invention;
FIG. 14 is an explanatory diagram of an outline of architecture of a conventional information providing system; and
FIG. 15 is an explanatory flowchart of an operation of the conventional information providing system.

### DESCRIPTION OF THE PREFERRED EMBODIMENTS

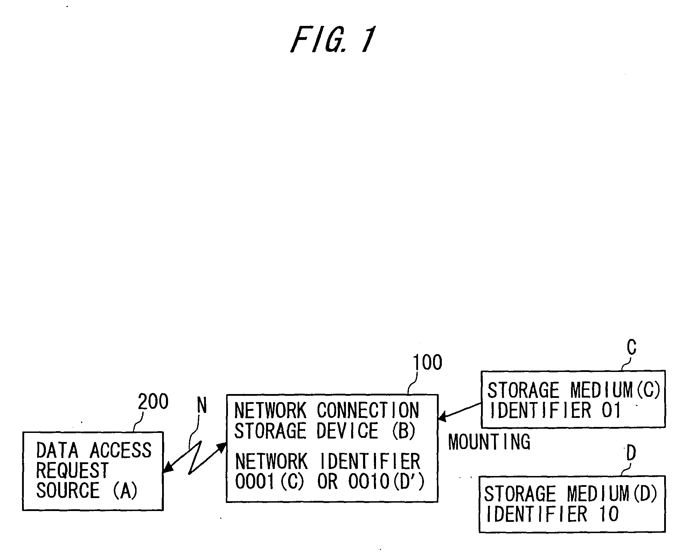

An information providing system in an embodiment of the present invention will hereinafter be explained with reference to the drawings. FIG. 1 is an explanatory diagram schematically showing an outline of architecture of an information providing system in the embodiment of the present invention.

As shown in FIG. 1, the information providing system includes a network connection storage device 100 and a client 200 (corresponding to an electronic device of the present invention) that are connected to a network N such as a LAN (Local Area Network), the Internet, and so on. There might be a case in which the number of network connection storage device(s) 100 and the number of client(s) 200 are each either singular or plural.

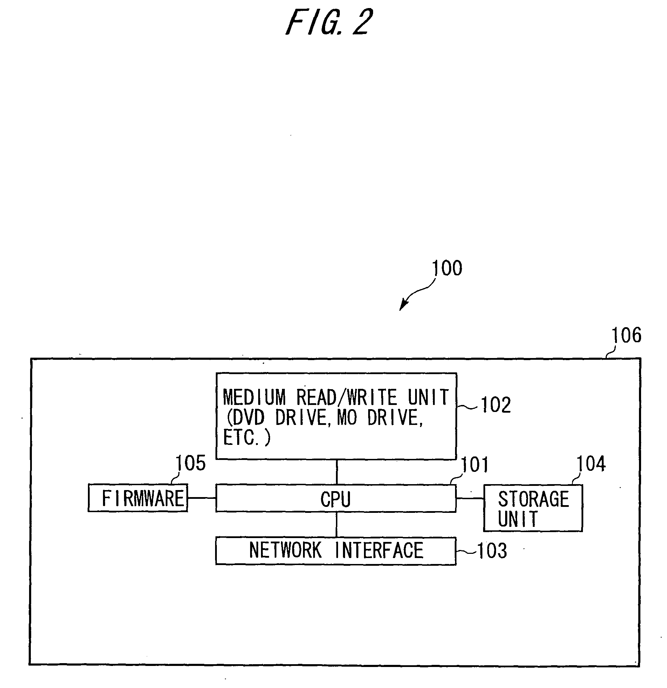

FIG. 2 is an explanatory diagram of a hardware architecture of the network connection storage device 100. The network connection storage device 100 is an information providing device for providing a predetermine information in response to an access from the client 200. The network connection storage device 100 includes a CPU 101 for controlling operations of the whole, a medium read/write unit 102, a network interface 103, a storage unit 104, firmware 105, etc., which are connected via a bus, etc. to the CPU 101. A substantially box-shaped network connection storage device body 106 accommodates these components.

The medium read/write unit 102 is a device for acquiring a predetermined providing target information and identifying information associated with the predetermined providing target information. The network connection storage device body 106 has an insert port (not shown) through which a storage medium (which will hereinafter be referred to as a storage medium C or D) is inserted. The storage medium C to be inserted through this insert port is mounted into the medium read/write unit 102, and so on. The storage medium C is recorded with the predetermined information and the identifying information associated with the predetermined information. The medium read/write unit 102 reads out the predetermined information, the identifying information, etc. from the storage medium C mounted therein. Note that the storage medium C is ejected from the insert port by manipulating an eject button (not shown) provided on the network connection storage device body 106 and the like.

A device suited to the storage medium C is employed as the medium read/write unit 102. For example, in the case of a DVD (DVD-ROM, etc.) serving as the storage medium C, a DVD drive is used. In the case of a MO disc serving as the storage medium C, a MO drive is employed.

The storage medium C is a storage medium attachable to and detachable from the network connection storage device 100. variety storage mediums, which are considered (classified) as the storage medium C, are the DVD-ROM, a DVD-RAM, the MO disc, the CD-ROM, a hard disc device, a flash memory or an IC card and so forth.

If the present invention and the storage medium C according to the present invention have only a function of retaining the information as by the DVD, the MO and the like, the network connection storage device 100 is required to include the medium read/write unit 102. Further, if the storage medium C has a function of reading and writing the information as by, e.g., the hard disc device, it follows that the storage medium C includes the medium read/write unit 102.

The storage medium C is recorded with a predetermined providing target information and identifying information associated with the predetermined information. Considered as the predetermined information are a file that.describes a set of movie data, a file describing a set of music data, a file describing a set of book data, or a file describing a set of business data and so on. Considered as the identifying information associated with the predetermined information is a medium identifier recorded on the storage medium C in order to identify the storage medium C, and so forth.

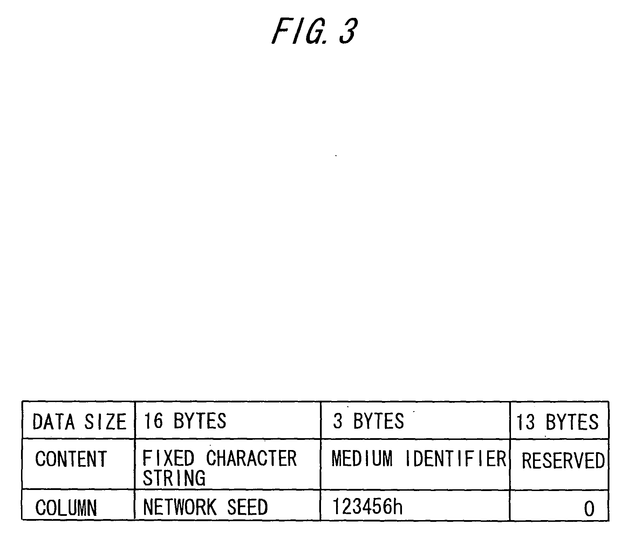

A variety of methods are considered as methods of recording the medium identifier on the storage medium C. Herein, the recording method in the case of using the DVD (DVD-ROM, etc.) as the storage medium C, will be explained. FIG. 3 is an explanatory diagram of the method of recording the medium identifier on the storage medium C.

The DVD generally has an area called [Primary Volume Descriptor] (JIS X0609: 1997-3.5.1) for recording information about the medium. This area contains a 32-byte area (known as) [Application Program Identifier] (JIS X0609: 1997-3.5.1.16) used for an application program. The medium identifier is recorded in this area. For example, as shown in FIG. 3, there is considered such data allocation that 16 bytes are allocated as a fixed character string, 3 bytes are allocated as a medium identifier, and 13 bytes are allocated as "reserve" in the area [Application program Identifier].

Note that each of the CD (CD-ROM, etc.), DVD-RAM, etc. has existence of the [Primary volume Descriptor] and therefore has the [Application Program Identifier], wherein the medium identifier can be set by the same method as on the DVD described above.

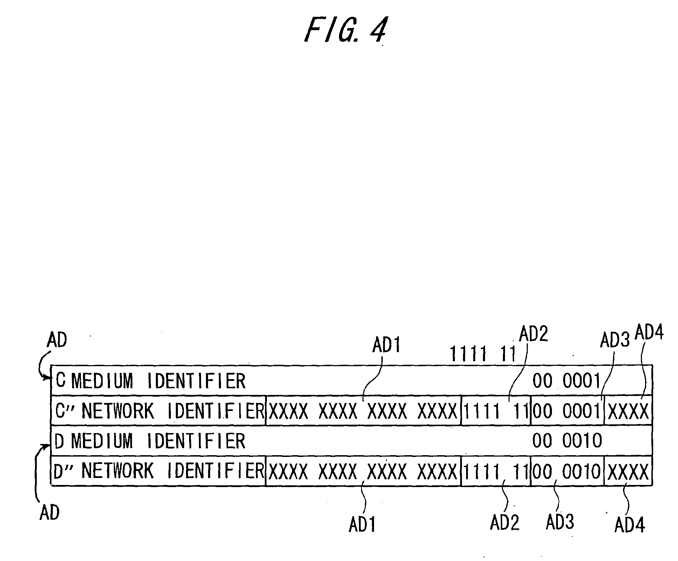

FIG. 4 shows an example of a format of the storage medium C. As shown in FIG. 4, according to the present embodiment, the storage medium C is recorded with a medium identifier "00 0001", and the storage medium D is recorded with a medium identifier "00 0010". Note that "X", "1" or "0" represents a value in hexadecimal number in FIG. 4.

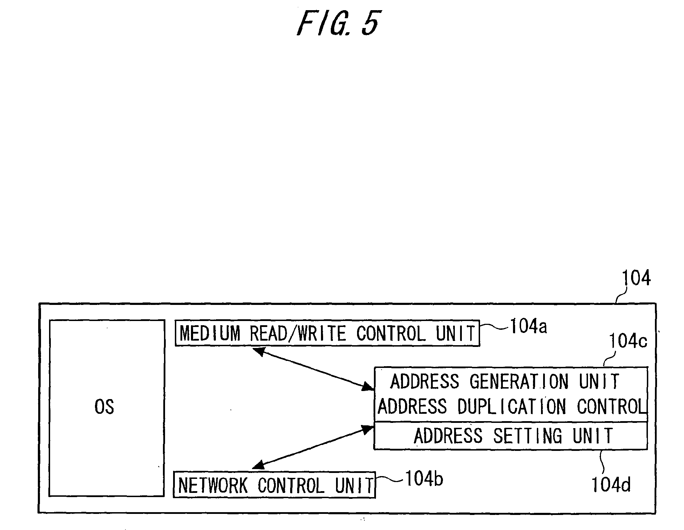

FIG. 5 is an explanatory diagram of a software architecture of the network connection storage device 100. A storage unit 104 of the hard disk device, etc. is installed with OS (Operating System) and a variety of programs executed on the OS and thus functioning as a medium read/write control unit 104a, a network control unit 104b, an address generation unit 104c, an address duplication control unit 104d and an address setting unit 104e.

The address read/write control unit 104a serves to control the medium read/write unit 102. The network control unit 104b serves to control the network interface 103, and so on. The address generation unit 104c serves to automatically generate an address (e.g., an IPv6 (Internet Protocol version 6) address) on the network on the basis of the identifying information (for example, the medium identifier read from the storage medium C) acquired by the medium read/write unit 102.

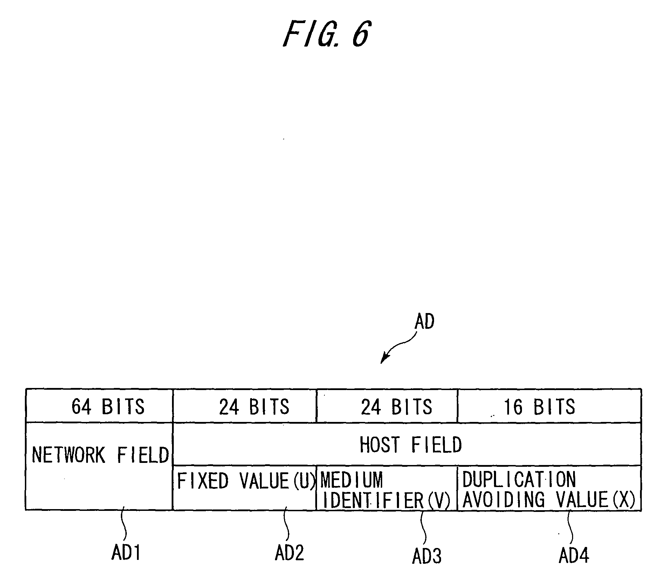

FIG. 6 shows a format of the IPv6 address automatically generated by the address generation unit 104c. As shown in FIG. 6, an automatically-generated IPv6 address AD is a bit string having totally 128 bits consisting of a network field AD1, a fixed value AD2, a medium identifier AD3 and a duplication avoiding value AD4.

In the case of the network connection storage device 100 and the client 200 that are included in the same LAN segment, the same bit string is set in the 64-bit network field AD1. A bit string distributed from a router, etc. connected to, e.g., the network N, is set in the network field AD1.

The 24-bit fixed value AD2 represents that the IPv6 address containing this fixed value AD2 is the address automatically generated by the present system. Set in the fixed value AD2 is, for instance, a fixed character string itself (when the fixed character string is a 24-bit string) read by the medium read/write unit 102 from the storage medium C, or a character string of which a bit length is adjusted to 24 bits by processing such as translating, adding, deleting, etc. with respect to this readout fixed character string (when the fixed character string is not the 24-bit string) .

The medium identifier itself (when the medium identifier is a 24-bit identifier) read from, e.g., the storage medium C by the medium read/write unit 102, or a medium identifier (when the medium identifier is not the 24-bite identifier) of which a bit length is adjusted to 24 bits by processing such as translating, adding, deleting, etc with respect to the readout medium identifier, is set in the 24-bit medium identifier AD3.

A unique value is set in the 16-bit duplication avoiding value AD4 by a duplication avoiding function based on IPv6. The duplication avoiding value AD4 starts from, e.g., "0".

The address generation unit 104c checks whether or not any IPv6 address duplicated with the automatically-generated IPv6 address exists on the network N. Execution of this check involves employing the IPv6-based address duplication avoiding function. The address setting unit 104e serves to set the IPv6 address generated by the address generation unit 104c as an address for accessing from the client 200.

The firmware 105 is a basic software suite containing BIOS (Basic Input Output System) and is stored on a built-in flash memory, and so on.

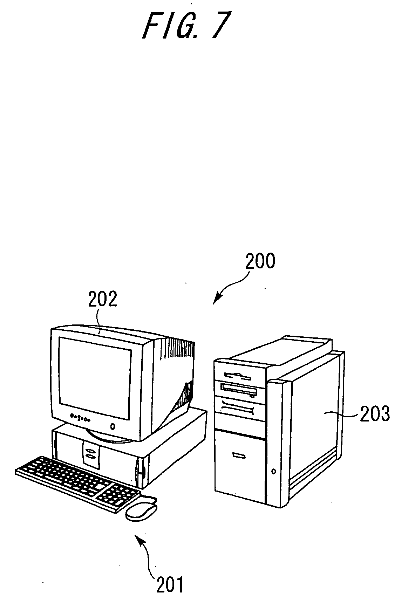

The client 200 serves to acquire the predetermined information by accessing the network connection storage device 100 via the network, and is, for instance, an information processing terminal such as a personal computer and the like. As shown in FIG. 7, the client 200 includes a CPU (not shown), an interface unit (not shown) used for performing data communications (using an IPv6 packet) by establishing a connection to the network N, an input unit 201 such as a keyboard, a mouse, etc., an image display device 202 such as a CRT display, a liquid crystal display, etc., and a storage unit 203 such as a hard disc device, etc., which are connected via a bus, etc. to the CPU.

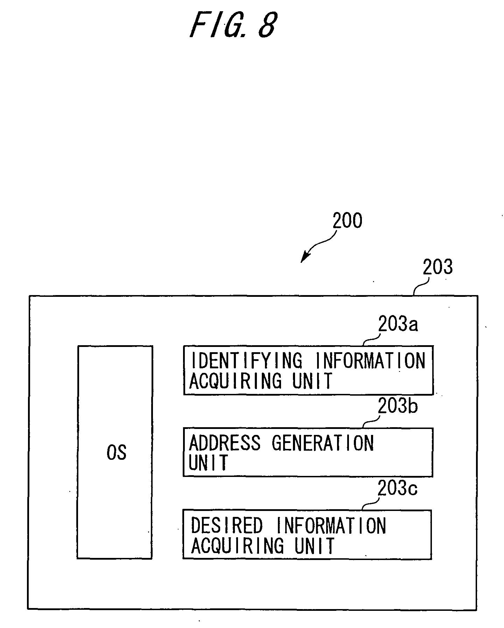

FIG. 8 is an explanatory diagram of a software architecture of the client 200. The storage unit 203 is installed with OS and a variety of programs executed on the OS and thus functioning as an identifying information acquiring unit 203a, an address generation unit 203b and a desired information acquiring unit 203c.

The identifying information acquiring unit 203a serves to acquire identifying information associated with a predetermined information desired by the user. The address generation unit 203b serves to generate an address on the network on the basis of the identifying information acquired by the identifying information acquiring unit 203a. The desired information acquiring unit 203c serves to acquire the predetermined information provided by a specified information providing device 100 by accessing the specified information providing device 100 on the basis of the address on the network generated by the address generation unit 203b.

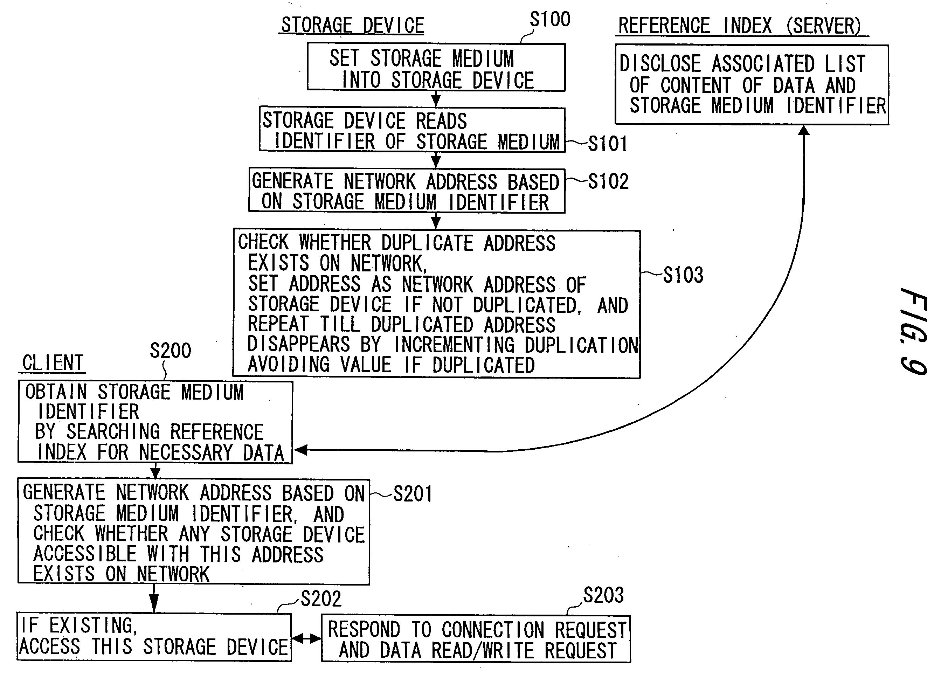

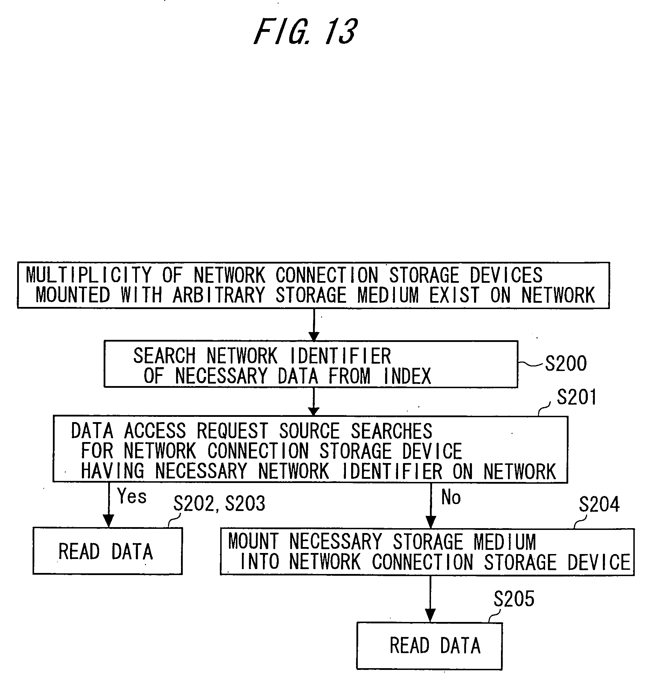

Next, an operation of the information providing system having the architecture described above will be explained with reference to the drawings. FIGS. 9 and 13 are explanatory flowcharts of the operation of the information providing system.

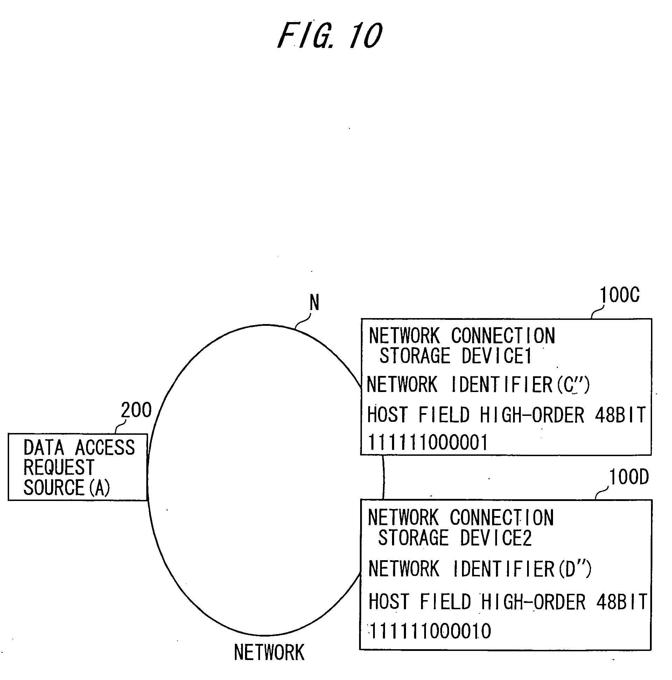

In the following explanation, as shown in FIG. 10, an assumption is that at least two of network connection storage devices 100 and one single client 200 are connected to the network N.

The respective network connection storage devices 100 have the same configuration, however, for the explanatory convenience, one device is referred to as a network connection storage device 100C, and the other is called a network connection storage device 100D. Note that "C" is suffixed to the tail of notation of every component (e.g., an address generation unit 104cC) of the network connection storage device 100C.

An initial explanation is about an operation till the address on the network is set in the network connection storage device 100C (this is the same with the network connection storage device 100D).

When the storage medium C is mounted into the network connection storage device 100C (S100), a medium read/write control unit 104aC controls a medium read/write unit 102C. Under this control, the medium read/write unit 102C reads the fixed value AD2 and the medium identifier AD3 from the thus-mounted storage medium C (S101). As shown in FIG. 4, the storage medium C is recorded with the medium identifier "00 0001", and hence this medium identifier is read out.

An address generation unit 104cC automatically generates an address (IPv6 address) on the network N on the basis of the medium identifier "00 0001" read from the storage medium C (S102). A second-stage area in FIG. 4 represents the IPv6 address to be automatically generated in the network connection storage device 100C. As shown in FIG. 4, the IPv6 address AD to be automatically generated consists of a network field AD1 distributed from the router, etc., a fixed character string (adjusted to a 24-bit length) AD2 read from the storage medium C, a medium identifier AD3 read from the storage medium C, and a duplication avoiding value AD4.

The address generation unit 104cC checks by utilizing the IPv6-based address duplication avoiding function whether or not any IPv6 address duplicated with the automatically-generated IPv6 address exists on the network N (S103). The network connection storage device 100C, when confirming that none of the duplicated IPv6 addresses exist, instructs the address setting unit 104eC to set the automatically-generated IPv6 address as an address for accessing from the client 200. Hereafter, the network connection storage device 100C becomes capable of providing the predetermined information (stored on the loaded storage medium C) to the client 200 gaining the access to this set address.

While on the other hand, when confirming in S103 that the duplicated IP address exists, the network connection storage device 100C increments the duplication avoiding value AD4 (by, e.g., "1"), and again checks whether or not any IPv6 address duplicated with the post-increment IPv6 address already exists on the network N. This duplication avoiding process is repeated till a non-duplicate IPv6 address is obtained, and therefore it follows that eventually a unique IPv6 address is to be acquired. In the network connection storage device 100C, the address setting unit 104eC sets the eventually-acquired unique IPv6 address as an address for accessing from the client 200. Hereafter, the network connection storage device 100C becomes capable of providing the predetermined information (stored on the mounted storage medium C) to the client 200 gaining the access to the set address.

Next, an operation of obtaining a desired predetermined information will be described. In the following discussion, an assumption is that the desired predetermined information (e.g., a file describing a set of movie data) be recorded on the storage medium C mounted into the network connection storage device 100C.

The client 200 needs to acquire, in order to access the network connection storage device 100C, an address (an address set for accessing from the client) set in this network connection storage device 100C, and this address is generated in the way that follows.

To begin with, the client 200 acquires, through the identifying information acquiring unit 203a, the medium identifying information of the storage medium C storing the desired predetermined information (S200). For instance, the client 200 acquires at least information (e.g., a title of a movie) indicating contents of the predetermined information in a reference index from a reference index management server via the network N, then displays the acquired information on the image display device 202, and prompts the user to select the information indicating the contents of at least one piece of predetermined information by use of the input unit 201 serving as a selection unit. The identifying information acquiring unit 203a can acquire, from the reference index, the identifying information with which the information indicating the contents of the selected predetermined information is associated.

The reference index is defined as a table in which the information (e.g., the movie title) indicating the contents of the predetermined information (the file describing, e.g., the movie data) is associated with the identifying information (the medium identifier of the storage medium C storing the predetermined information) associated with the predetermined information. According to the present embodiment, the reference index contains at least the associated relation between the information indicating the contents of the predetermined information recorded on the storage medium C and the identifying information "00 0001" of the storage medium C storing the predetermined information.

Herein, it is assumed that the information indicating the contents of the predetermined information recorded on the storage medium C is selected, and that the medium identifier "00 0001" of the storage medium C, with which the information indicating the contents of the selected predetermined information is associated, is acquired.

Note that the medium identifying information of the storage medium C recorded with the desired predetermined information may be inputted directly by the user through the input unit 201, etc. without using the reference index described above.

When acquiring the medium identifying information of the storage medium C storing the desired predetermined information, the client 200 automatically generates the address (the IPv6 address) on the network N on the basis of the acquired medium identifier "00 0001" by the address generation unit 203b (S201). This auto-generation process is substantially the same as the process explained in S102. The thus automatically-generated IPv6 address AD consists of the network field AD1 distributed from the router, etc., the fixed character string (adjusted to the 24-bit length) AD2 stored beforehand on the storage unit 203 or the like, the medium identifier AD3 of the storage medium C that has been acquired by the identifying information acquiring unit 203a, and the duplication avoiding value AD4.

The client 200 checks whether or not the network connection storage device 100C accessible by use of the automatically-generated IPv6 address exists on the network N. For example, the client 200 sends a predetermined packet, in which the automatically-generated IPv6 address is set as a destination address, onto the network N, and, when a reply packet is obtained, confirms that the accessible network connection storage device 100C exists. Whereas if the reply packet is not obtained, the client 200 confirms that the accessible network connection storage device 100C does not exist. In this case, the user mounts the storage medium storing the desired predetermined information into any one of the network connection storage devices 100 connected to the network N, and the processing is executed again from S200 (S204, S205).

In the present embodiment, the IPv6 address based on the medium identifier read from the storage medium C is set as the address for accessing from the client 200 in the network connection storage device 100C (S102). Thus, the client 200 confirms the existence of the network connection storage device 100C. Then, the client 200 accesses the network connection storage device 100C on the basis of the IPv6 address generated in S201 by the desired information acquiring unit 203c, and acquires the predetermined information (i.e., the desired predetermined information stored on the storage medium C) provided by the network connection storage device 100C (S202, S203).

The client 200, in the case of acquiring the file describing the movie data as the predetermined information, displays a video of the movie on the image display device 202 on the basis of the predetermined information. Further, the client 200, in the case of acquiring the file describing the music data as the predetermined information, outputs the music on the basis of the predetermined information from a loudspeaker. Moreover, the client 200, in the case of acquiring the file describing the book data as the predetermined information, displays a page image, etc. of the book on the image display device 202 on the basis of the predetermined information.

As discussed above, according to the information providing system in the present embodiment, the address on the network (the IPv6 address) generated based on the identifying information (e.g., the medium identifying information inputted by the user, or the medium identifying information read from the storage medium) associated with the predetermined information, is set as the address for accessing from the client 200 in the network connection storage device 100. On the occasion of acquiring the desired predetermined information, the client 200 acquires the identifying information (e.g., the identifying information inputted by the user, or the identifying information acquired through the reference index) associated with the desired predetermined information, then accesses the network connection storage device 100 on the basis of the address on the network generated based on the acquired identifying information, and thus acquires the predetermined information (the desired predetermined information) provided by this network connection storage device 100.

Accordingly, on the occasion of acquiring the desired predetermined information, the client 200, if able to acquire the identifying information associated with the desired predetermined information, can acquire the desired predetermined information. In this case, the user has no necessity of grasping the network connection storage device capable of providing the desired predetermined information.

Further, when the network connection storage devices 100 are installed over a broad range on the network N, it is possible to reduce a load on the network N, which occurs due to the specified data. For example, the network connection storage device 100 is, it can be considered, provided in every LAN segment.

Further, the address on the network is set in the device (the network connection storage device) simply by mounting the storage medium into this device, and hence, unlike the prior arts, the user's operation for address setting is not required, and the usability is improved.

Next, a modified example of the embodiment discussed above will be explained.

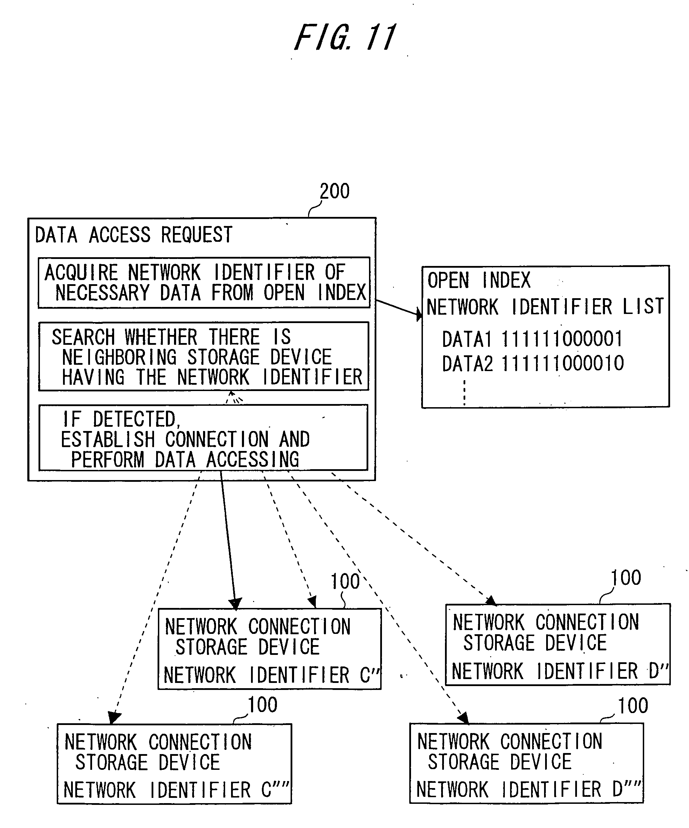

The embodiment discussed above, as shown in FIG. 10, has exemplified the example in which the two network connection storage devices 100 are connected to the network N. The present invention is not, however, limited to this configuration. For example, as shown in FIG. 11, four network connection storage devices 100 may be connected to the network N, and the network connection storage devices 100, of which the number is equal to or larger or smaller than "4" , may also be connected thereto.

Moreover, the embodiment discussed above has exemplified the storage medium storing the predetermined information and the identifying information associated with the predetermined information as the storage medium attachable to and detachable from the network connection storage device 100, however, the present invention is not limited to this type of storage medium. For instance, as a substitute for or in combination with this type of storage medium, there may be employed a storage device (e.g., a built-in or external hard disc device of the network connection storage device 100) storing the predetermined information and the identifying information associated with the predetermined information.

With this contrivance, the predetermined information and the identifying information associated with the predetermined information can be stored, rewritten, added or deleted via the network, and so on.

Moreover, the embodiment discussed above has exemplified the scheme of automatically generating the address (the IPv6 address) on network N on the basis of the medium identifier read from the storage medium, however, the present invention is not limited to this scheme. For instance, the user is prompted to input the medium identifier from on the input unit such as the keyboard, etc. connected to the network connection storage device 100, and the IPv6 address may be automatically generated based on this inputted medium identifier. Note that the address setting of setting this automatically-generated IPv6 address as the address for accessing from the client 200 is the same as in the embodiment discussed above.

Furthermore, the embodiment discussed above has exemplified the structure that the predetermined information and the medium identifier, etc. are stored in the area [application program identifier] on the storage medium, however, the present invention is not limited to this structure. For example, when the predetermined information is stored as a file, the medium identifier thereof may also be stored in a header field, etc. of this file. In this case, the medium read/write unit 102 reads the identifying information from the header field, etc. of the file.

Further, the embodiment discussed above has exemplified the information storage mode in a way that stores the storage medium with one piece of predetermined information, however, the present invention is not limited to this information storage mode. For instance, the storage medium may be storing two (or more) pieces of predetermined information and pieces of identifying information (described as the medium identifier according to the embodiment discussed above) associated with the respective pieces of predetermined information. In this case, the address generation unit 104c automatically generates the IPv6 addresses (two addresses in this case) based on the respective pieces of identifying information. The address setting unit 104e sets one IPv6 address, which has been automatically generated, as an address for an access to one piece of predetermined information from the client 200, and sets the other IPv6 address, which has been automatically generated, as an address for an access to the other piece of predetermined information from the client 200.

Moreover, the embodiment discussed above has exemplified the reference index acquisition mode in a way that acquires the reference index from the server connected to the network N, however, the present invention is not limited to this index acquisition mode. For example, the reference index may be stored previously on the storage unit 203 of the client 200 and may be acquired from this storage unit 203.

Furthermore, the embodiment discussed above has exemplified the information display mode, wherein on the occasion of acquiring the medium identifying information of the storage medium C storing the predetermined information desired by the user, all the information (e.g., the title of the movie) indicating the contents of the predetermined information in the reference index is displayed on the image display device 202, however, the present invention is not limited to this information display mode. For instance, the reference index may further contain an associated relation of an identifier for distinguishing between a mounted state and a non-mounted state of the storage medium storing the predetermined information, whereby only the information indicating the contents of the predetermined information in the medium mounted-state indicated by this identifier, may be displayed and then selected. This contrivance eliminates a possibility of selecting the information indicating the contents of the predetermined information in the medium non-mounted state.

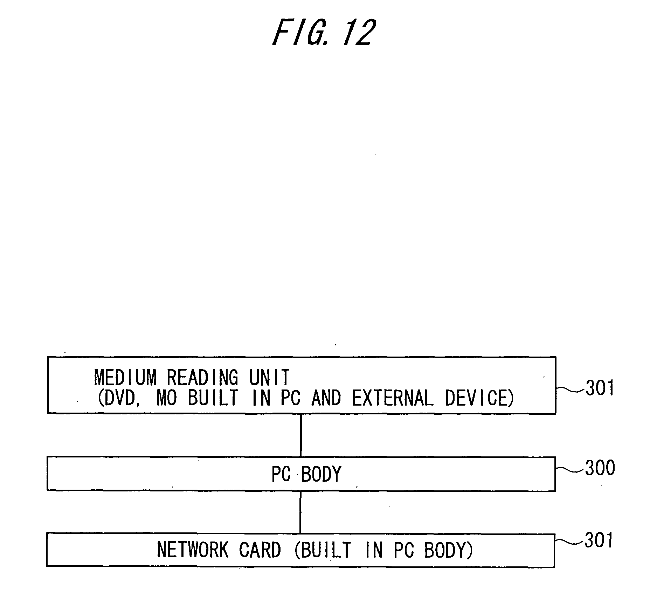

Moreover, the embodiment discussed above has exemplified the network connection storage device 100 as a dedicated device in which the box-shaped network connection storage device body 106 accommodates the CPU 101, etc., however, the present invention is not limited to this construction. For example, as shown in FIG. 12, the network connection storage device 100 can be constructed of an information processing terminal 300 such as a personal computer, etc., and a medium reading unit 301 and a network card 302, etc. which are built in (or externally attached to) the information processing terminal 300. A storage unit (not shown) connected to the information processing terminal 300 is, as in the case of the network connection storage device 100, installed with OS (Operating System) and a variety of programs executed on the OS and functioning as a medium read/write control unit 104a, a network control unit 104b, an address generation unit 104c, an address duplication control unit 104d and an address setting unit 104e. These functions have already been explained in a way that marks them with the same reference numerals and symbols, and hence their descriptions are omitted. Note that in the case of building up the network connection storage device 100 by use of the information processing terminal 300, it is considered that the address setting unit 104e sets the IPv6 address generated by the address generation unit 104c in the network card 301 as an address for accessing from the client 200 (IP alias). In this case, it follows that an address is set differently from the network address assigned to the information processing terminal 300.

The present invention can be embodied in other various forms without departing from the spirit or the main features of the invention. Therefore, the embodiment discussed above is nothing but a mere exemplification in every aspect and should not be construed limitedly.

### <Industrial Applicability>

The present invention is capable of detecting whether a necessary storage medium is set in a storage device and accessible from network or not by checking a network address. With this scheme utilized, accessible data can be located close to users through networking by previously distributing storage mediums over a broad range, whereby load sharing of the network can be attained.

## Claims

1. An information providing system including an electronic device and an information providing device providing predetermined information in response to an access from the electronic device,
the information providing device comprising:
a first acquiring unit acquiring identifying information associated with the predetermined information;
a first generation unit generating an address on a network on the basis of the identifying information acquired by the first acquiring unit; and
a setting unit setting the address on the network generated by the first generation unit as an address for accessing from the electronic device,
the electronic device comprising:
a second acquiring unit acquiring identifying information associated with predetermined information desired by a user;
a second generation unit generating a address on a network on the basis of the identifying information acquired by the second acquiring unit; and
a desired information acquiring unit acquiring predetermined information provided by a specified information providing device by accessing the specified information providing device on the basis of the address on the network generated by the second generation unit.

2. An information providing system according to claim 1, further comprising a mounting unit into which a storage medium to record predetermined information and identifying information associated with the predetermined information is mounted,
wherein the first acquiring unit reads the identifying information from the storage medium mounted into the mounting unit.

3. An information providing system according to claim 2, wherein the storage medium records with the predetermined information and a storage medium identifier as the identifying information associated with the predetermined information.

4. An information providing system according to claim 1, further comprising a storage device storing predetermined information and identifying information associated with the predetermined information,
wherein the first acquiring unit reads the identifying information from the storage device.

5. An information providing system according to any one of Claims 1 to 4, wherein the predetermined information is at least one of movie data, music data, book data and business data.

6. An information providing system according to any one of Claims 1 to 5, wherein the electronic device further comprises:
an image display device displaying information indicating contents of predetermined information in a reference index in which the information indicating the contents of the predetermined information provided by the information providing device is associated with identifying information associated with the predetermined information; and
a selection unit being selected at least one of the information indicating the contents of the predetermined information from within the information indicating the contents of the predetermined information being displayed on the image display device, and
wherein the second acquiring unit acquires identifying information with which the information indicating the contents of the predetermined information, being selected on the selection unit, is associated.

7. An information providing device providing predetermined information in response to an access from an electronic device, comprising:
an acquiring unit acquiring identifying information associated with the predetermined information;
a generation unit generating an address on a network on the basis of the identifying information acquired by the acquiring unit; and
a setting unit setting the address on the network generated by the generation unit as an address for accessing from the electronic device.

8. An information providing device according to claim 7, wherein the acquiring unit reads the identifying information from a storage medium storing the predetermined information and the identifying information associated with the predetermined information.

9. An information providing device according to claim 8, wherein the storage medium records the predetermined information and a storage medium identifier as the identifying information associated with the predetermined information.

10. An information.providing device according to claim 7, further comprising a storage device storing the predetermined information and the identifying information associated with the predetermined information,
wherein the acquiring unit reads the identifying information from the storage device.

11. An information providing device according to any one of Claims 7 to 10, wherein the predetermined information is at least one of movie data, music data, book data and business data.

12. An electronic device acquiring predetermined information by accessing an information providing device via a network, comprising:
an identifying information acquiring unit acquiring identifying information associated with the predetermined information desired by a user;
a generation unit generating an address on a network on the basis of the identifying information acquired by the identifying information acquiring unit; and
a desired information acquiring unit acquiring the predetermined information provided by a specified information providing device by accessing the specified information providing device on the basis of the address on the network generated by the generation unit.

13. An electronic device according to claim 12, further comprising:
an image display device displaying information indicating contents of the predetermined information in a reference index in which the information indicating the contents of the predetermined information provided by the information providing device is associated with identifying information associated with the predetermined information; and
a selection unit being selected at least one of the information indicating the contents of the predetermined information from within the information indicating the contents of the predetermined information being displayed on the image display device,
wherein the acquiring unit acquires the identifying information with which the information indicating the contents of the predetermined information, being selected on the selection unit, is associated.

14. An address setting method of setting an address in an information providing device providing predetermined information in response to an access from an electronic device, comprising the steps of:
acquiring identifying information associated with the predetermined information;
generating an address on a network on the basis of the acquired identifying information; and
setting the generated address on the network as an address for accessing from the electronic device.

15. An information acquiring method of acquiring predetermined information by accessing an information providing device via a network, comprising the steps of:
acquiring identifying information associated with the predetermined information desired by a user;
generating an address on the network on the basis of the acquired identifying information; and
acquiring the predetermined information provided by the specified information providing device by accessing the specified information providing device on the basis of the generated address on the network.

16. A program of setting an address in an information providing device providing predetermined information in response to an access from an electronic device, the program making a computer execute the steps of:
acquiring identifying information associated with the predetermined information;
generating an address on the network on the basis of the acquired identifying information; and
setting the generated address on the network as an address for accessing from the electronic device.

17. A program of acquiring predetermined information by accessing an information providing device, the program making a computer execute the steps of:
acquiring identifying information associated with the predetermined information desired by a user;
generating an address on a network on the basis of the acquired identifying information; and
acquiring the predetermined information provided by the specified information providing device by accessing the specified information providing device on the basis of the generated address on the network.

18. A storage medium readable by an information providing device providing predetermined information in response to an access from an electronic device, the information providing device comprising:
an acquiring unit acquiring identifying information associated with the predetermined information;
a generation unit generating an address on a network on the basis of the identifying information acquired by the acquiring unit; and
a setting unit setting the address on the network generated by the generation unit as an address for accessing from the electronic device,
wherein the storage medium records with the predetermined information and the identifying information associated with the predetermined information.
